(19) **Europäisches Patentamt / European Patent Office / Office européen des brevets**

(11) **EP 4 390 859 A1**

(12) # EUROPEAN PATENT APPLICATION

(43) Date of publication:
**26.06.2024 Bulletin 2024/26**

(21) Application number: **23215427.8**

(22) Date of filing: **11.12.2023**

(51) International Patent Classification (IPC):
**G06V 10/26** $^{(2022.01)}$   **G06T 5/60** $^{(2024.01)}$
**G06V 10/80** $^{(2022.01)}$   **G06V 10/82** $^{(2022.01)}$
**G06V 10/98** $^{(2022.01)}$   **G06V 20/10** $^{(2022.01)}$

(52) Cooperative Patent Classification (CPC):
**G06V 10/82; G06V 10/26; G06V 10/803;
G06V 10/806; G06V 10/993; G06V 20/10;**
Y02D 10/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.12.2022 CN 202211635300**

(71) Applicant: **Aerospace Information Research
Institute,
Chinese Academy of Sciences
Beijing 100094 (CN)**

(72) Inventors:
• **SUN, Xian**
  **Beijing, 100094 (CN)**

• **FU, Kun**
  **Beijing, 100094 (CN)**
• **WANG, Peijin**
  **Beijing, 100048 (CN)**
• **CHANG, Hao**
  **Beijing, 100094 (CN)**
• **LU, Wanxuan**
  **Beijing, 100094 (CN)**
• **BI, Hanbo**
  **Beijing, 100094 (CN)**
• **HE, Qibin**
  **Beijing, 100094 (CN)**
• **RONG, Xuee**
  **Beijing, 100094 (CN)**

(74) Representative: **Gill Jennings & Every LLP
The Broadgate Tower
20 Primrose Street
London EC2A 2ES (GB)**

(54) **MULTIMODAL REMOTE SENSING IMAGE PROCESSING METHOD BASED ON SPARSE MIXTURE-OF-EXPERTS NETWORK PRE-TRAINING**

(57)    A multimodal remote sensing image processing method based on sparse mixture-of-experts network pre-training is provided. The method includes: inputting a to-be-processed image set to a general coding unit to obtain an intermediate image set, where the intermediate image set includes multiple intermediate image groups, each of the intermediate image groups includes a target number of intermediate images; inputting the intermediate image set to a special coding unit to obtain a processed image set, where the special coding unit includes multiple coding module groups, each of the coding module groups includes multiple coding modules, and each of the intermediate image groups is inputted to a coding module in a coding module group having a same mode type as the coding module group; and inputting the processed image set to a decoding unit to obtain a processing result. With the method, the number of image processing of each of coding modules in the special coding unit is reduced, thereby improving the overall processing speed and reducing the processing time.

Input a to-be-processed image set to a general coding unit to obtain an intermediate image set — S100

Input the intermediate image set to a special coding unit to obtain a processed image set — S200

Input the processed image set to a decoding unit to obtain a processing result — S300

**Figure 1**

EP 4 390 859 A1

## Description

## FIELD

The present disclosure relates to the field of multimodal images, and in particular to a multimodal remote sensing image processing method based on sparse mixture-of-experts network pre-training.

## BACKGROUND

In performing an image processing task (such as object identification) with a neural network model for, it is required to train an initial neural network model firstly, so that the trained neural network model may perform the image processing task.

According to related technologies, pre-training is performed on the initial neural network model before training on the actual task, so that the initial neural network model may learn prior knowledge through pre-training, so that the pre-trained neural network model may meet the training requirements in subsequent training on the actual task. In addition, an accurate result can be obtained by processing the actual task using the trained neural network model.

However, in performing a pre-training task (such as pixel repairment) of a remote sensing image, the remote sensing image generally has multiple mode types of images (such as optical images, synthetic aperture radar images or near-infrared images), and the data amount of geographical or scene information corresponding to a remote sensing image per unit area is far higher than the data amount of other images (such as ordinary street images). Therefore, in the pre-training of relevant processing tasks of the multimodal remote sensing images, a huge number (up to tens of billions) of parameters are generated and processed by the neural network model in operation. Thus, to achieve model performance same as model performance of other images after pre-training, the time complexity and computational complexity of image processing increase greatly, resulting in a large overall processing time-consuming.

## SUMMARY

In view of this, a multimodal remote sensing image processing method based on sparse mixture-of-experts network pre-training is provided according to the present disclosure, to solve the problem of the large overall processing time-consuming due to that the time complexity and computational complexity increase exponentially in image processing in pre-training related processing tasks of a multimodal image according to the conventional technology.

According to an aspect of the present disclosure, a multimodal remote sensing image processing method based on sparse mixture-of-experts network pre-training is provided. The method includes:

inputting a to-be-processed image set to a general coding unit to obtain an intermediate image set, where the to-be-processed image set includes multiple to-be-processed images, the multiple to-be-processed images includes at least two mode types of images, the intermediate image set includes multiple intermediate image groups, each of the intermediate image groups includes a target number of intermediate images, the intermediate images are the to-be-processed images after being processed by the general coding unit, intermediate images in a same intermediate image group correspond to a same mode type, and intermediate images in different intermediate image groups correspond to different mode types;

inputting the intermediate image set to a special coding unit to obtain a processed image set, where the special coding unit includes multiple coding module groups, each of the coding module groups includes multiple coding modules, each of the coding module groups corresponds to a mode type, a coding module performs single-mode coding processing on an intermediate image having a mode type corresponding to a coding module group that includes the coding module, and the special coding unit, after receiving the intermediate image set, inputs each of the intermediate image groups to a coding module in a coding module group having a same mode type as the coding module group; and

inputting the processed image set to a decoding unit to obtain a processing result.

In an exemplary embodiment of the present disclosure, the number of the coding module groups is same as the number of the intermediate image groups, and both the multiple coding module groups and the multiple intermediate image groups are arranged in a first order.

In an exemplary embodiment of the present disclosure, each of the coding module groups includes the same number of coding modules.

In an exemplary embodiment of the present disclosure, the intermediate images in each of the intermediate image groups are arranged in the second order, and intermediate images having a same sequence number in different intermediate image groups correspond to a same geographical area.

In an exemplary embodiment of the present disclosure, the to-be-processed image set includes multiple to-be-processed image groups, and each of the to-be-processed image groups includes a target number of to-be-processed images.

The to-be-processed images in each of the to-be-processed image groups are arranged in a second order, and to-be-processed images having a same sequence number in different to-be-processed image groups correspond to a same geographical area.

To-be-processed images in a same to-be-processed image group correspond to the same mode type, and to-be-processed images in different to-be-processed image groups correspond to different mode types.

In an exemplary embodiment of the present disclosure, the general coding unit, after receiving the to-be-processed image set, performs multimodal joint coding processing on to-be-processed images having a same sequence number in all the to-be-processed image groups.

In an exemplary embodiment of the present disclosure, before inputting the to-be-processed image set to the general coding unit, the multimodal remote sensing image processing method further includes:

obtaining original image groups respectively corresponding to target geographic areas, where each of the original image groups includes at least two original images corresponding to a same target geographic area, each of the original image groups includes a same number of original images, and original images in a same original image group correspond to different mode types;

performing image segmentation on each of original images based on a same resolution rule to obtain multiple candidate to-be-processed images; and

performing data selection on the multiple candidate to-be-processed images based on a preset data selection rule to obtain the to-be-processed image set.

According to another aspect of the present disclosure, a multimodal remote sensing image processing apparatus based on sparse mixture-of-experts network pre-training is provided. The apparatus includes: a first processing module, a second processing module, and a third processing module.

The first processing module is configured to input a to-be-processed image set to a general coding unit to obtain an intermediate image set. The to-be-processed image set includes multiple to-be-processed images, and the multiple to-be-processed images include at least two mode types of images. The intermediate image set includes multiple intermediate image groups, each of the intermediate image groups includes a target number of intermediate images, and the intermediate images are the to-be-processed images after being processed by the general coding unit. Intermediate images in a same intermediate image group correspond to a same mode type, and intermediate images in different intermediate image groups correspond to different mode types.

The second processing module is configured to input the intermediate image set to a special coding unit to obtain a processed image set. The special coding unit includes multiple coding module groups, and each of the coding module groups includes multiple coding modules. Each of the coding module groups corresponds to a mode type, and a coding module performs single-mode coding processing on an intermediate image having a mode type corresponding to a coding module group that includes the coding module. The special coding unit, after receiving the intermediate image set, inputs each of the intermediate image groups to a coding module in a coding module group having a same mode type as the coding module group.

The third processing module is configured to input the processed image set to a decoding unit to obtain a processing result.

In an exemplary embodiment of the present disclosure, the number of the coding module groups is same as the number of the intermediate image groups, and both the multiple coding module groups and the multiple intermediate image groups are arranged in a first order.

In an exemplary embodiment of the present disclosure, each of the coding module groups includes the same number of coding modules.

In an exemplary embodiment of the present disclosure, the intermediate images in each of the intermediate image groups are arranged in the second order, and intermediate images having a same sequence number in different intermediate image groups correspond to a same geographical area.

In an exemplary embodiment of the present disclosure, the to-be-processed image set includes multiple to-be-processed image groups, and each of the to-be-processed image groups includes a target number of to-be-processed images.

The to-be-processed images in each of the to-be-processed image groups are arranged in a second order, and to-be-processed images having a same sequence number in different to-be-processed image groups correspond to a same geographical area.

To-be-processed images in a same to-be-processed image group correspond to the same mode type, and to-be-processed images in different to-be-processed image groups correspond to different mode types.

In an exemplary embodiment of the present disclosure, the general coding unit, after receiving the to-be-processed image set, performs multimodal joint coding processing on to-be-processed images having a same sequence number in all the to-be-processed image groups.

In an exemplary embodiment of the present disclosure, the multimodal remote sensing image processing apparatus further includes: an obtaining module, a segmentation module, and a selection module.

The obtaining module is configured to obtain original image groups respectively corresponding to target geographic areas. Each of the original image groups includes at least two original images corresponding to a same target geographic area, each of the original image groups includes a same number of original images, and original images in a same original image group correspond to different mode types.

The segmentation module is configured to perform image segmentation on each of original images based on a same resolution rule to obtain multiple candidate to-be-processed images.

The selection module is configured to perform data selection on the multiple candidate to-be-processed images based on a preset data selection rule to obtain the to-be-processed image set.

According to another aspect of the present disclosure, an electronic device is provided. The electronic device includes: a memory and a processor. The processor is configured to, when executing a program or instructions stored in the memory, perform the multimodal remote sensing image processing method described above.

According to another aspect of the present disclosure, a non-transient computer-readable storage medium is provided. The non-transient computer-readable storage medium stores a program or instructions. The program or the instructions, when executed on a computer, cause the computer to perform the multimodal remote sensing image processing method described above.

According to the present disclosure, the following beneficial effects can be achieved.

In the multimodal remote sensing image processing method based on sparse mixture-of-experts network pre-training according to the present disclosure, after obtaining the to-be-processed image set including multiple mode types of to-be-processed images, each of the to-be-processed images in the to-be-processed image set is processed by the general coding unit, and the outputted intermediate images forms the intermediate image set.

After receiving the intermediate image set, the special coding unit inputs each of the intermediate image groups to a coding module in a coding module group having a same mode type as the coding module group, so that the coding module in the coding module group may process the intermediate image having the mode type corresponding to the coding module. In processing the intermediate image, the coding module adjusts internal parameters, so that the coding module may specifically learn prior knowledge corresponding to the mode type. Thus, after processing a sufficient number of intermediate images corresponding to the mode type, the coding module may better encode and process images corresponding to the mode type in subsequently processing tasks or training, so that the encoded image retains more important information.

According to the present disclosure, each of coding module groups in the special coding unit is configured to only process intermediate images having the mode type corresponding to the coding module group, so that different coding module groups may separately process intermediate images having different mode types rather than processing intermediate images of all mode types, thereby improving the processing efficiency. In addition, since the coding modules in each of the coding module groups only process intermediate images of a single mode type, the processed intermediate image having the mode type corresponding to the coding module group remain image information with high accuracy and importance, and the intermediate images of the mode type can be optimally processed, achieving a high-accuracy processing result outputted by the decoding unit. Thus, with the method according to the present disclosure, the number of image processing of each of coding modules in the special coding unit is reduced with ensuring the accuracy of the processing result, thereby reducing the time complexity and computational complexity of the overall processing process, improving the overall processing speed and reducing the processing time.

## BRIEF DESCRIPTION OF THE DRAWINGS

In order to more clearly illustrate the technical solutions of embodiments of the present disclosure, drawings to be used in the description of the embodiments of the present disclosure are briefly described hereinafter. It is apparent that the drawings in the following description show only some embodiments of the present disclosure. Those skilled in the art can obtain other drawings based on these drawings without any creative efforts.

Figure 1 is a flow chart of a multimodal remote sensing image processing method based on sparse mixture-of-experts network pre-training according to an embodiment of the present disclosure;

Figure 2 is a flow chart of a multimodal remote sensing image processing method based on sparse mixture-of-experts network pre-training according to another embodiment of the present disclosure;

Figure 3 is a schematic structural diagram of an image processor according to an embodiment of the present disclosure;

Figure 4 is a schematic structural diagram of a multimodal remote sensing image processing apparatus based on sparse mixture-of-experts network pre-training according to an embodiment of the present disclosure; and

Figure 5 is a schematic structural diagram of a multimodal remote sensing image processing apparatus based on sparse mixture-of-experts network pre-training according to another embodiment of the present disclosure.

## DETAILED DESCRIPTION

The embodiments of the present disclosure are described in detail in conjunction with the drawings of the embodiments of the present disclosure.

It should be noted that, without conflict, the following embodiments and the features in the embodiments may be combined with each other. Moreover, all other embodiments obtained by those skilled in the art without any creative efforts based on the embodiments of the present disclosure fall within the protection scope of the present disclosure.

It should be noted that various aspects of embodiments within the scope of the attached claims are described below. It is apparent that the aspects described in this specification may be reflected in a wide variety of forms, and any specific structures and/or functions described in this specification are only illustrative. Based on the present disclosure, those skilled in the art should understand that one aspect described herein may be independently implemented with any other aspect, and that two or more of these aspects may be combined in various ways. For example, any number of aspects described in this specification may be used to implement a device and/or practical a method. In addition, other structures and/or functionalities other than those described in this specification may be used to implement the device and/or practice the method.

Term explanation

Prior knowledge is knowledge verified in advance. After obtaining the prior knowledge, the neural network model may infer knowledge required for subsequent processing tasks.

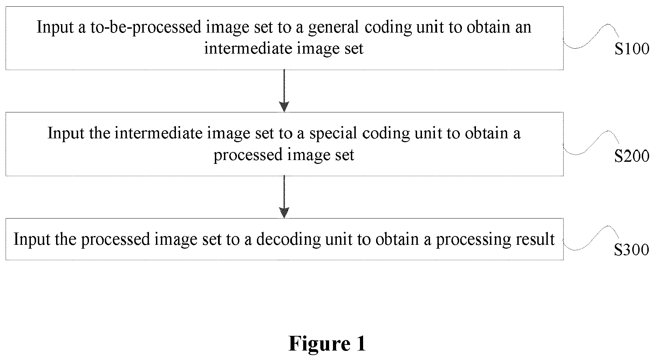

Referring to Figure 1, a multimodal remote sensing image processing method based on sparse mixture-of-experts network pre-training is provided according to an aspect of the present disclosure, which may be applied to an electronic device with data processing capability, such as a computer, a laptop, or a server.

The multimodal remote sensing image processing method includes the following steps S100 to S300.

In S100, a to-be-processed image set is inputted to a general coding unit to obtain an intermediate image set.

The to-be-processed image set includes multiple to-be-processed images, and the multiple to-be-processed images include at least two mode types of images. Specifically, the to-be-processed images may be remote sensing images, and the mode type may include an optical type, a radar type and a near-infrared type. For example, in a case that the remote sensing image is an optical remote sensing image, the corresponding mode type is the optical type, and so on.

The intermediate image set includes multiple intermediate image groups. Each of the intermediate image groups includes a target number of intermediate images. The intermediate images are the to-be-processed images after being processed by the general coding unit. Intermediate images in a same intermediate image group correspond to a same mode type, and intermediate images in different intermediate image groups correspond to different mode types. The target number is configured according to the actual requirements, and may be determined by those skilled in the field according to the actual requirements.

In the embodiment, the intermediate image set may include multiple intermediate image groups, and the intermediate image groups are defined for convenience of describing and understanding. It is not strictly limited to that an intermediate image group should be marked or stored in a same folder or form a specific set, but only includes multiple intermediate images of a same mode type.

In a specific implementation, arrangement or setting of to-be-processed images in a to-be-processed image set may be same as arrangement or setting of intermediate images in an intermediate image group, so that the structure inputted to the general coding unit is same as the structure outputted by the general coding unit. The arrangement or setting of the to-be-processed images in the to-be-processed image set may be not limited, and the general coding unit may arrange the intermediate images after being processed in an intermediate image set.

Specifically, the general coding unit may include multiple general coding modules, such as a normalization module, a self-attention module and a convolution module. In some embodiments, the normalization module, the self-attention module and the convolution module may be respectively called as a normalization layer, a self-attention layer and a convolution layer.

In S200, the intermediate image set is inputted to a special coding unit to obtain a processed image set.

The special coding unit includes multiple coding module groups. Each of the coding module groups includes multiple coding modules. Each of the coding module groups corresponds to a mode type. A coding module performs single-mode coding processing on an intermediate image having a mode type corresponding to a coding module group that includes the coding module. The special coding unit, after receiving the intermediate image set, inputs each of the intermediate image groups to a coding module in a coding module group having a same mode type as the coding module group.

In the embodiment, coding modules may be numbered or sorted, and then it is determined which coding modules belong to a same coding module group based on a rule. For example, the rule may be defined that coding modules numbered 1 to 5 belong to a same coding module group and correspond to an optical mode type, and so on.

In the embodiment, coding modules in a coding module group may process images of a mode type corresponding to the coding module group. The single-mode coding processing may be performed by training and learning image information or performing image feature extraction on the image information. In the embodiment, the encoding module may be an MLP (Multilayer Perceptron) and the like. Specifically, the encoding module in the embodiment may be a double-layer MLP.

In the embodiment, encoding modules in a same encoding module group receive and process intermediate images of a mode type corresponding to the encoding module group, so that same intermediate images are obtained by the encoding modules, thereby balancing the performances of the encoding modules in the same encoding module group.

In generating the processed image set, it is required to perform fusion (such as weighted fusion) on data outputted by the encoding modules in the same encoding module group for a same intermediate image, and then a processed image corresponding to the intermediate image is obtained.

In S300, the processed image set is inputted to a decoding unit to obtain a processing result. The processing result may be a probability of the to-be-processed image includes a preset item, a three-dimension model corresponding to the to-be-processed image, a repaired image corresponding to the to-be-processed image, or the like.

The decoding unit may process the processed image set by performing target identification, pixel repairment or three-dimension reconstruction on the processed image set. Correspondingly, different processing results are obtained by the decoding unit for processing different tasks.

In the embodiment, the general coding unit, the special coding unit and the decoding unit may be arranged in a same image processor. The image processor may perform a processing task, such as object identification, pixel repairment or three-dimension reconstruction. Based on the technical solutions according to the present disclosure, those skilled in the art may determine configurations and internal structures of the general coding unit, the special coding unit and the decoding unit.

The multimodal remote sensing image processing method based on sparse mixture-of-experts network pre-training in the embodiment may be performed in using a trained image processor or may be performed in a general coding unit, a special coding unit and a decoding unit in pre-training an image processor.

In the embodiment, the above steps S100 to S300 are steps for pre-training the image processor for remote sensing image processing, and the training task corresponding to the image processor is pixel repairment.

The multimodal remote sensing image processing method based on sparse mixture-of-experts network pre-training in the embodiment may be performed based on a localized framework Mindspore. For example, the general coding unit, the special coding unit and the decoding unit in the embodiment may be implemented by a server using the framework Mindspore.

In the embodiment, the to-be-processed image may be an image obtained by performing pixel confusion processing or pixel destruction processing on an initial image (that is, a normal image). The general coding unit may process the to-be-processed image by performing pixel feature extraction and learning on the to-be-processed image without distinguishing mode types. The special coding unit may process the to-be-processed image by performing pixel feature extraction and learning on the intermediate image of a single mode type. The decoding unit may process the processed image by performing pixel repairment on pixels modified by pixel confusion or pixel destruction in the processed image, and then output a repaired image (that is, the processing result). It may be determined whether a pre-training requirement is met based on a difference between the repaired image outputted by the decoding unit and the initial image. For a same batch of to-be-verified images, in a case that the difference between the repaired image and the initial image is less than a predetermined difference threshold, it is determined that the pre-training requirement is met, and subsequent pre-training may be stopped. The difference threshold may range from 0.01% to 5%. In the present disclosure, the difference threshold is 1%.

In the embodiment, the pre-training task of the image processor is configured as pixel repairment, so that the general coding unit and the special coding unit may learn pixel distribution feature of remote sensing images. Then, in training the pre-trained image processor based on a practical task (such as target identification), prior knowledge may be learned in the training process, so that the training objective can be quickly achieved and the trained image processor may process the actual task accurately. It should be understood that in the embodiment, the actual task may be same as the pre-training task, and the actual task and pre-training task are named differently only for distinguishing tasks in different stages.

In the multimodal remote sensing image processing method based on sparse mixture-of-experts network pre-training according to the present disclosure, after obtaining the to-be-processed image set including multiple mode types of to-be-processed images, each of the to-be-processed images in the to-be-processed image set is processed by the general coding unit, and the outputted intermediate images forms the intermediate image set.

After receiving the intermediate image set, the special coding unit inputs each of the intermediate image groups to a coding module in a coding module group having a same mode type as the coding module group, so that the coding module in the coding module group may process the intermediate image having the mode type corresponding to the coding module. In processing the intermediate image, the coding module adjusts internal parameters, so that the coding module may specifically learn prior knowledge corresponding to the mode type. Thus, after processing a sufficient number of intermediate images corresponding to the mode type, the coding module may better encode and process images corresponding to the mode type in subsequently processing tasks or training, so that the encoded image retains more important information.

In the embodiment, each of coding module groups in the special coding unit is configured to only process intermediate images having the mode type corresponding to the coding module group, so that different coding module groups may separately process intermediate images having different mode types rather than processing intermediate images of all mode types, thereby improving the processing efficiency. In addition, since the coding modules in each of the coding module groups only process intermediate images of a single mode type, the processed intermediate image having the mode type corresponding to the coding module group remain image information with high accuracy and importance, and the intermediate images of the mode type can be optimally processed, achieving a high-accuracy processing result outputted by the decoding unit. Thus, with the method according to the present disclosure, the number of image processing of each of coding modules in the special coding unit is reduced with ensuring the accuracy of the processing result, thereby reducing the time complexity and computational complexity of the overall processing process, improving the overall processing speed and reducing the processing time. It is tested that even if the number of parameters generated and processed by the image processor in operation reaches tens of billions, the processing speed similar to the speed of processing ordinary images can be achieved.

In an exemplary embodiment of the present disclosure, the number of coding module groups is same as the number of the intermediate image groups, and both the multiple coding module groups and the multiple intermediate image groups are arranged in a first order.

In the first order, the encoding module groups or the intermediate image groups having an optical mode type are arranged at the top, the encoding module groups or the intermediate image groups having a radar mode type are arranged in the middle, and the encoding module groups or the intermediate image groups having a near-infrared mode type are arranged at the bottom.

It should be understood that the above description is only an exemplary example for that there are three mode types, those skilled in the art may adjust the number of mode types and the order of the encoding module groups or the intermediate image groups as the first order according to actual requirements.

In the embodiment, the number of the coding module groups is configured to be similar to the number of the intermediate image groups, and the coding module groups and the intermediate image groups are arranged in the same order, so that the special coding unit may determine a coding module group corresponding to each of the intermediate image groups based on the order of the intermediate image groups without marking the mode type of the intermediate image or the intermediate image group. Thus, the processing of the initial images or the intermediate images by the staff can be reduced. It is unnecessary to arrange a mode identification module (such as gate control network) for identifying the mode type in the special coding unit, thereby reducing the workload of the staff and reducing the difficulty in designing the special coding unit. In addition, the number of logical processing operations of the dedicated encoding units is reduced without arranging the mode identification module, thereby improving the efficiency of the special coding unit.

In an exemplary embodiment of the present disclosure, each of the coding module groups includes the same number of coding modules. The number of the coding modules in each of the coding module groups is determined based on at least one of: the number of the to-be-processed images, the number of mode types corresponding to the to-be-processed images, and the number of parameters generated and processed by the dedicated coding unit in operation.

In the embodiment, each of the coding module groups includes the same number of coding modules, so that each of the coding module groups after being trained may be applied to training multiple actual tasks, rather than only to training a single actual task. Thus, it is required to replicate multiple pre-trained image processors. In a case of training the multiple pre-trained image processors for different actual tasks, it is only required to perform pre-training once without having to pre-training initial image processors for each of the actual tasks, thereby improving the overall training efficiency.

Those skilled in the art may further determine the number of coding modules in each of the coding module groups according to the predetermined pre-training requirements and based on the amount of remote sensing image data to be used.

In an exemplary embodiment of the present disclosure, the intermediate images in each of the intermediate image groups are arranged in the second order, and intermediate images having a same sequence number in different intermediate image groups correspond to a same geographical area.

The second order may be any soring order of the intermediate images in the intermediate image group. For example, the soring order of the intermediate images in the intermediate image group may be determined based on the selecting order of the images, simply ensuring that intermediate images having a same sequence number in different intermediate image groups correspond to a same geographical area.

Specifically, that corresponding to a same geographical area may be understood as obtaining geographic information of a same geographical area.

In the embodiment, the intermediate images having a same sequence number in different intermediate image groups correspond to a same geographical area, so that the intermediate images processed by different coding modules correspond to the same geographical area, avoiding unbalanced processing performance of coding modules due to that the coding modules process images having different mode types of different geographic areas. Thus, the performance of the coding modules of the special coding unit is balanced to adapt to different actual tasks.

In an exemplary embodiment of the present disclosure, the to-be-processed image set includes multiple to-be-processed image groups. Each of the multiple to-be-processed image groups includes a target number of to-be-processed images. That is, the number of intermediate images in each of the to-be-processed image group is same as the number of the intermediate images in each of the intermediate image groups.

The to-be-processed images in each of the to-be-processed image groups are arranged in the second order, and to-be-processed images having a same sequence number in different to-be-processed image groups correspond to a same geographical area.

To-be-processed images in a same to-be-processed image group correspond to the same mode type, and to-be-processed images in different to-be-processed image groups correspond to different mode types.

As can be seen from the above descriptions, the order in which the images are arranged in the to-be-processed image set is same as the order in which the images are arranged in the intermediate image set, so that the general coding unit outputs received to-be-processed images in the same order without reordering the received to-be-processed images to obtain the intermediate image set, thereby reducing the processing operations of the general coding unit and improving the processing efficiency.

Specifically, the to-be-processed image set may be configured as:

$$A=(a_1, a_2, ..., a_i, ... a_n), i=1, 2, ..., n.$$

where, A represents the to-be-processed image set, $a_i$ represents an i-th to-be-processed image in A, n represents the number of to-be-processed images in A, and n represents an integer multiple of the number (after being deduplicated) of mode types corresponding to the to-be-processed images in A.

In a case that the number of mode types corresponding to the to-be-processed images in A is m, $a_i$, $a_2$, ..., and $a_{1*n/m}$ form a first to-be-processed image group in A, and $a_{j*n/m+1}$, $a_{j*n/m+2}$, ..., a $_{(j+1)/m}$ form a j-th to-be-processed image group in A, where j=1, 2..., m.

$a_g$, $a_{1*n/m+g}$, $a_{2*n/m+g}$, ..., $a_{j*n/m+g}$, ..., and $a_{(m-1)*n/m+g}$ correspond to a same geographical area, where g=1, 2, ..., n/m.

In the above case, both the general coding unit and the special coding unit may directly determine all the images corresponding to each of the image groups based on n and m, and may determine all the images corresponding to a same geography area in A.

In an exemplary embodiment of this application, the general coding unit, after receiving the to-be-processed image set, performs multimodal joint coding processing on to-be-processed images having a same sequence number in all the to-be-processed image groups.

Specifically, the multimodal joint coding processing includes:

performing local feature extraction on the to-be-processed images (that is, $a_g$, $a_{1*n/m+g}$, $a_{2*n/m+g}$, ..., $a_{j*n/m}+_g$, ..., and $a_{(m-1)*n/m+g}$) having the same sequence number in all the to-be-processed image groups to obtain multiple local features corresponding to each of the to-be-processed images;

determining a feature loss value corresponding to each of the local features;

determining a local feature corresponding to a feature loss value greater than a preset loss threshold as a target local feature;

determining a replacement local feature for the target local features based on a local feature corresponding to the target local feature in a local area of the to-be-processed image; and

replacing the target local feature with the replacement local feature.

In the embodiment, based on local features between to-be-processed images that have different mode types and correspond to the same geographical area, feature replacement is performed on a local feature having a feature loss greater than a predetermined loss threshold to improve the image quality of the to-be-processed image corresponding to the target local feature, thereby realizing cross-mode image complementation and achieving accurate subsequent processing results.

Further, in the present disclosure, based on the arrangement of the to-be-processed images in the to-be-processed image set described above, the general coding unit may directly determine the mode type corresponding to each of the to-be-processed images and all to-be-processed images corresponding to the same geographical region without marking the geographical areas and the mode types of the to-be-processed images, thereby reduce the processing of the initial images by the staff.

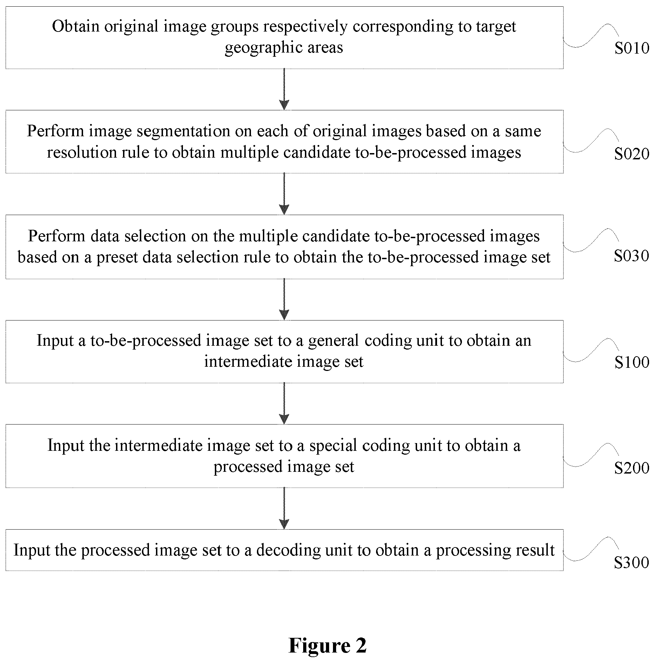

Referring to Figure 2, in an exemplary embodiment of the present disclosure, before inputting the to-be-processed image set to the general coding unit, the multimodal remote sensing image processing method further includes the following steps S010, S020, and S030.

In S010, original image groups respectively corresponding to target geographic areas are obtained. There may be multiple original image groups. Different original image groups correspond to different geographical areas. Each of the original image groups includes at least two original images corresponding to a same target geographic area. Each of the original image groups includes a same number of original images, and original images in a same original image group correspond to different mode types. In the embodiment, the original image is a remote sensing image.

In S020, image segmentation is performed on each of original images based on a same resolution rule to obtain multiple candidate to-be-processed images.

The same resolution rule is used for each of the original images, then corresponding candidate to-be-processed images (which may be understood as image fragments) are obtained by performing image segmentation on the original images that correspond to multiple mode types and correspond to the same target geographic area, and the image size of each of the candidate to-be-processed images meets a preset requirement. Those skilled in the art may obtain the resolution rule based on the preset requirement for image size, which is not described herein.

In S030, data selection is performed on the multiple candidate to-be-processed images based on a preset data selection rule to obtain the to-be-processed image set.

In the embodiment, the original image is a remote sensing image. Due to the large size of the remote sensing image, the internal processing efficiency of the image processor is to be reduced in a case that the remote sensing image is directly inputted to the image processor, resulting in a long overall processing period. Therefore, image segmentation is performed on the original images in the embodiment, so that the image sizes of the candidate to-be-processed images meet the preset requirement, thereby improving the overall processing efficiency of the image processor and reducing preset time consuming.

Further, in the embodiment, the selection rule is defined as follows. K candidate to-be-processed images are randomly selected from the target original image group as the first to-be-processed images, where K may be configured according to actual requirements. In the embodiment, K ranges from 10 to 50. Specifically, in the embodiment, K=16. Candidate to-be-processed images, corresponding to a geographic area same as the first to-be-processed images, are selected from other original image groups as the second to-be-processed images. The first to-be-processed images and the second to-be-processed images are determined as the to-be-processed images, thereby obtaining the to-be-processed image set.

The candidate to-be-processed images are randomly selected from the target original image group, so that the final determined to-be-processed images include information about ground objects of multiple target geographic areas, and the image processor may learn image features of various information about ground objects in one pre-training process.

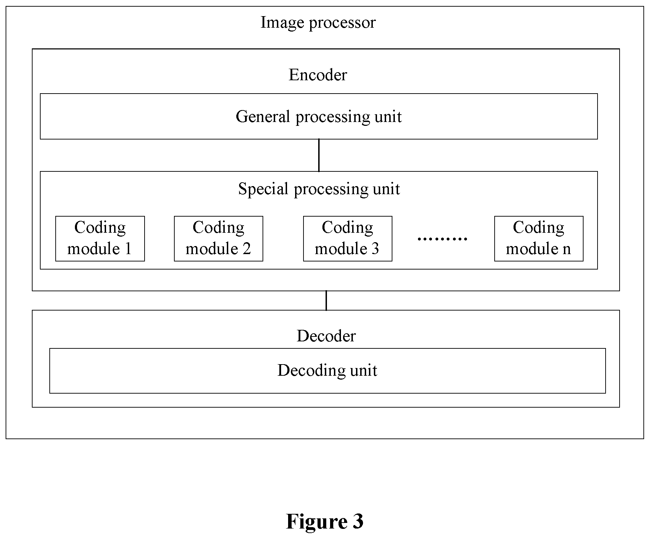

In an exemplary embodiment of the present disclosure, a general encoding unit and a special encoding unit may be implemented by an encoder, a decoding unit may be implemented by a decoder, and an image processor may include multiple encoders and multiple decoders (in this case, the image processor may be a neural network model). In a case that multiple encoders are arranged, the multiple encoders are sequentially connected. A to-be-processed image set is inputted to the encoder, and a processed image set is outputted by the encoder. It should be understood that an output of a previous encoder is to be inputted to a current encoder, that is, the order in which the images are arranged in the to-be-processed image set is same as the order in which the images are arranged in the processed image set. In a case that multiple decoders are arranged, the multiple decoders are sequentially connected, and each of the decoders is connected to the encoder at the bottom. That is, the output of the encoder at the bottom is to be inputted to each of the decoders, an output of a previous decoder is inputted to a current decoder, and an output of the encoder at the bottom serves as the output of the image processor. As shown in Figure 3, a schematic structural diagram of an image processor including one encoder and one decoder is provided.

The number of the encoders and the decoders may be determined by those skilled in the art according to actual requirements.

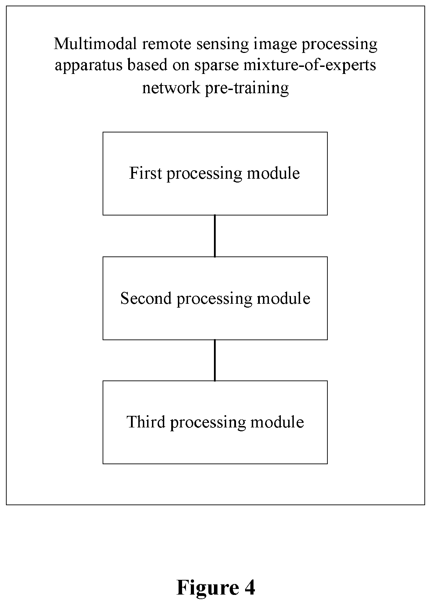

Referring to Figure 4, a multimodal remote sensing image processing apparatus based on sparse mixture-of-experts network pre-training is provided according to another aspect of the present disclosure, which may be arranged in an electronic device with data processing capability, such as a computer, a laptop, or a server.

The multimodal remote sensing image processing apparatus based on sparse mixture-of-experts network pre-training includes: a first processing module, a second processing module, and a third processing module.

The first processing module is configured to input a to-be-processed image set to a general coding unit to obtain an intermediate image set.

The to-be-processed image set includes multiple to-be-processed images, and the multiple to-be-processed images include at least two mode types of images. The intermediate image set includes multiple intermediate image groups, each of the intermediate image groups includes a target number of intermediate images, and the intermediate images are the to-be-processed images after being processed by the general coding unit. Intermediate images in a same intermediate image group correspond to a same mode type, and intermediate images in different intermediate image groups correspond to different mode types.

The intermediate image set includes multiple intermediate image groups. Each of the intermediate image groups includes a target number of intermediate images. The intermediate images are the to-be-processed images after being processed by the general coding unit. Intermediate images in a same intermediate image group correspond to a same mode type, and intermediate images in different intermediate image groups correspond to different mode types.

In the embodiment, the intermediate image set may include multiple intermediate image groups, and the intermediate image groups are defined for convenience of describing and understanding. It is not strictly limited to that an intermediate image group should be marked or stored in a same folder or form a specific set, but only includes multiple intermediate images of a same mode type.

In a specific implementation, arrangement or setting of to-be-processed images in a to-be-processed image set may be same as arrangement or setting of intermediate images in an intermediate image group, so that the structure inputted to the general coding unit is same as the structure outputted by the general coding unit. The arrangement or setting of the to-be-processed images in the to-be-processed image set may be not limited, and the general coding unit may arrange the intermediate images after being processed in an intermediate image set.

Specifically, the general coding unit may include multiple general coding modules, such as a normalization module, a self-attention module and a convolution module. In some embodiments, the normalization module, the self-attention module and the convolution module may be respectively called as a normalization layer, a self-attention layer and a convolution layer.

The second processing module is configured to input the intermediate image set to a special coding unit to obtain a processed image set.

The special coding unit includes multiple coding module groups, and each of the coding module groups includes multiple coding modules. Each of the coding module groups corresponds to a mode type, and a coding module performs single-mode coding processing on an intermediate image having a mode type corresponding to a coding module group that includes the coding module. The special coding unit, after receiving the intermediate image set, inputs each of the intermediate image groups to a coding module in a coding module group having a same mode type as the coding module group.

In the embodiment, coding modules may be numbered or sorted, and then it is determined which coding modules belong to a same coding module group based on a rule. For example, the rule may be defined that coding modules numbered 1 to 5 belong to a same coding module group and correspond to an optical mode type, and so on.

In the embodiment, coding modules in a coding module group may process images of a mode type corresponding to the coding module group. The single-mode coding processing may be performed by training and learning image information or performing image feature extraction on the image information. In the embodiment, the encoding module may be an MLP (Multilayer Perceptron) and the like. Specifically, the encoding module in the embodiment may be a double-layer MLP.

In the embodiment, encoding modules in a same encoding module group receive and process intermediate images of a mode type corresponding to the encoding module group, so that same intermediate images are obtained by the encoding modules, thereby balancing the performances of the encoding modules in the same encoding module group.

In generating the processed image set, it is required to perform fusion (such as weighted fusion) on data outputted by the encoding modules in the same encoding module group for a same intermediate image, and then a processed image corresponding to the intermediate image is obtained.

The third processing module is configured to input the processed image set to a decoding unit to obtain a processing result. The processing result may be a probability of the to-be-processed image includes a preset item, a three-dimension model corresponding to the to-be-processed image, a repaired image corresponding to the to-be-processed image, or the like.

In the embodiment, the first processing module, the second processing module, and the third processing module perform operations sequentially.

The decoding unit may process the processed image set by performing target identification, pixel repairment or three-dimension reconstruction on the processed image set. Correspondingly, different processing results are obtained by the decoding unit for processing different tasks.

In the embodiment, the general coding unit, the special coding unit and the decoding unit may be arranged in a same image processor. The image processor may perform a processing task, such as object identification, pixel repairment or three-dimension reconstruction. Based on the technical solutions according to the present disclosure, those skilled in the art may determine configurations and internal structures of the general coding unit, the special coding unit and the decoding unit.

In the multimodal remote sensing image processing apparatus based on sparse mixture-of-experts network pre-training according to the embodiment, the first processing module, the second processing module, and the third processing module may operate in using a trained image processor or may operate in a general coding unit, a special coding unit and a decoding unit in pre-training an image processor.

In the embodiment, the first processing module, the second processing module, and the third processing module may operate in pre-training the image processor for remote sensing image processing, and the training task corresponding to the image processor is pixel repairment.

In the embodiment, the to-be-processed image may be an image obtained by performing pixel confusion processing or pixel destruction processing on an initial image (that is, a normal image). The general coding unit may process the to-be-processed image by performing pixel feature extraction and learning on the to-be-processed image without distinguishing mode types. The special coding unit may process the to-be-processed image by performing pixel feature extraction and learning on the intermediate image of a single mode type. The decoding unit may process the processed image by performing pixel repairment on pixels modified by pixel confusion or pixel destruction in the processed image, and then output a repaired image (that is, the processing result). It may be determined whether a pre-training requirement is met based on a difference between the repaired image outputted by the decoding unit and the initial image. For a same batch of to-be-verified images, in a case that the difference between the repaired image and the initial image is less than a predetermined difference threshold, it is determined that the pre-training requirement is met, and subsequent pre-training may be stopped. The difference threshold may range from 0.01% to 5%. In the present disclosure, the difference threshold is 1%.

In the embodiment, the pre-training task of the image processor is configured as pixel repairment, so that the general coding unit and the special coding unit may learn pixel distribution feature of remote sensing images. Then, in training the pre-trained image processor based on a practical task (such as target identification), prior knowledge may be learned in the training process, so that the training objective can be quickly achieved and the trained image processor may process the actual task accurately. It should be understood that in the embodiment, the actual task may be same as the pre-training task, and the actual task and pre-training task are named differently only for distinguishing tasks in different stages.

The multimodal remote sensing image processing apparatus based on sparse mixture-of-experts network pre-training according to the present disclosure, after obtaining the to-be-processed image set including multiple mode types of to-be-processed images, each of the to-be-processed images in the to-be-processed image set is processed by the general coding unit, and the outputted intermediate images forms the intermediate image set.

After receiving the intermediate image set, the special coding unit inputs each of the intermediate image groups to a coding module in a coding module group having a same mode type as the coding module group, so that the coding module in the coding module group may process the intermediate image having the mode type corresponding to the coding module. In processing the intermediate image, the coding module adjusts internal parameters, so that the coding module may specifically learn prior knowledge corresponding to the mode type. Thus, after processing a sufficient number of intermediate images corresponding to the mode type, the coding module may better encode and process images corresponding to the mode type in subsequently processing tasks or training, so that the encoded image retains more important information.

In the embodiment, each of coding module groups in the special coding unit is configured to only process intermediate images having the mode type corresponding to the coding module group, so that different coding module groups may separately process intermediate images having different mode types rather than processing intermediate images of all mode types, thereby improving the processing efficiency. In addition, since the coding modules in each of the coding module groups only process intermediate images of a single mode type, the processed intermediate image having the mode type corresponding to the coding module group remain image information with high accuracy and importance, and the intermediate images of the mode type can be optimally processed, achieving a high-accuracy processing result outputted by the decoding unit. Thus, with the method according to the present disclosure, the number of image processing of each of coding modules in the special coding unit is reduced with ensuring the accuracy of the processing result, thereby reducing the time complexity and computational complexity of the overall processing process, improving the overall processing speed and reducing the processing time. It is tested that even if the number of parameters generated and processed by the image processor in operation reaches tens of billions, the processing speed similar to the speed of processing ordinary images can be achieved.

In an exemplary embodiment of the present disclosure, the number of coding module groups is same as the number of the intermediate image groups, and both the multiple coding module groups and the multiple intermediate image groups are arranged in a first order.

In the first order, the encoding module groups or the intermediate image groups having an optical mode type are arranged at the top, the encoding module groups or the intermediate image groups having a radar mode type are arranged in the middle, and the encoding module groups or the intermediate image groups having a near-infrared mode type are arranged at the bottom.

It should be understood that the above description is only an exemplary example for that there are three mode types, those skilled in the art may adjust the number of mode types and the order of the encoding module groups or the intermediate image groups as the first order according to actual requirements.

In the embodiment, the number of the coding module groups is configured to be similar to the number of the intermediate image groups, and the coding module groups and the intermediate image groups are arranged in the same order, so that the special coding unit may determine a coding module group corresponding to each of the intermediate image groups based on the order of the intermediate image groups without marking the mode type of the intermediate image or the intermediate image group. Thus, the processing of the initial images or the intermediate images by the staff can be reduced. It is unnecessary to arrange a mode identification module (such as gate control network) for identifying the mode type in the special coding unit, thereby reducing the workload of the staff and reducing the difficulty in designing the special coding unit. In addition, the number of logical processing operations of the dedicated encoding units is reduced without arranging the mode identification module, thereby improving the efficiency of the special coding unit.

In an exemplary embodiment of the present disclosure, each of the coding module groups includes the same number of coding modules.

The number of the coding modules in each of the coding module group is determined based on at least one of: the number of the to-be-processed images, the number of mode types corresponding to the to-be-processed images, and the number of parameters generated and processed by the dedicated coding unit in operation.

In the embodiment, each of the coding module groups includes the same number of coding modules, so that each of the coding module groups after being trained may be applied to training multiple actual tasks, rather than only to training a single actual task. Thus, it is required to replicate multiple pre-trained image processors. In a case of training the multiple pre-trained image processors for different actual tasks, it is only required to perform pre-training once without having to pre-training initial image processors for each of the actual tasks, thereby improving the overall training efficiency.

Those skilled in the art may further determine the number of coding modules in each of the coding module groups according to the predetermined pre-training requirements and based on the amount of remote sensing image data to be used.

In an exemplary embodiment of the present disclosure, the intermediate images in each of the intermediate image groups are arranged in the second order, and intermediate images having a same sequence number in different intermediate image groups correspond to a same geographical area.

The second order may be any soring order of the intermediate images in the intermediate image group. For example, the soring order of the intermediate images in the intermediate image group may be determined based on the selecting order of the images, simply ensuring that intermediate images having a same sequence number in different intermediate image groups correspond to a same geographical area.

Specifically, that corresponding to a same geographical area may be understood as obtaining geographic information of a same geographical area.

In the embodiment, the intermediate images having a same sequence number in different intermediate image groups correspond to a same geographical area, so that the intermediate images processed by different coding modules correspond to the same geographical area, avoiding unbalanced processing performance of coding modules due to that the coding modules process images having different mode types of different geographic areas. Thus, the performance of the coding modules of the special coding unit is balanced to adapt to different actual tasks.

In an exemplary embodiment of the present disclosure, the to-be-processed image set includes multiple to-be-processed image groups. Each of the multiple to-be-processed image groups includes a target number of to-be-processed images.

The to-be-processed images in each of the to-be-processed image groups are arranged in the second order, and to-be-processed images having a same sequence number in different to-be-processed image groups correspond to a same geographical area.

To-be-processed images in a same to-be-processed image group correspond to the same mode type, and to-be-processed images in different to-be-processed image groups correspond to different mode types.

As can be seen from the above descriptions, the order in which the images are arranged in the to-be-processed image set is same as the order in which the images are arranged in the intermediate image set, so that the general coding unit outputs received to-be-processed images in the same order without reordering the received to-be-processed images to obtain the intermediate image set, thereby reducing the processing operations of the general coding unit and improving the processing efficiency.

Specifically, the to-be-processed image set may be configured as:

$$A=(a_1, a_2, ..., a_i, ... an), i=1, 2, ..., n.$$

where, A represents the to-be-processed image set, $a_i$ represents an i-th to-be-processed image in A, n represents the number of to-be-processed images in A, and n represents an integer multiple of the number (after being deduplicated) of mode types corresponding to the to-be-processed images in A.

In a case that the number of mode types corresponding to the to-be-processed images in A is m, ai, $a_2$, ..., and $a_{1*n/m}$ form a first to-be-processed image group in A, and $a_{j*n/m+1}$, $a_{j*n/m+2}$, ..., a $_{(j+1)/m}$ form a j-th to-be-processed image group in A, where j=1, 2..., m.

$a_g$, $a_{1*n/m+g}$, $a_{2*n/m+g}$, ..., $a_{j*n/m}+_g$, ..., and $a_{(m-1)*n/m+g}$ correspond to a same geographical area, where g=1, 2, ..., n/m.

In the above case, both the general coding unit and the special coding unit may directly determine all the images corresponding to each of the image groups based on n and m, and may determine all the images corresponding to a same geography area in A.

In an exemplary embodiment of this application, the general coding unit, after receiving the to-be-processed image set, performs multimodal joint coding processing on to-be-processed images having a same sequence number in all the to-be-processed image groups.

Specifically, the multimodal joint coding processing includes:

performing local feature extraction on the to-be-processed images (that is, $a_g$, $a_{1*n/m+g}$, $a_{2*n/m+g}$, ..., $a_{j*n/m}+_g$, ..., and $a_{(m-1)*n/m+g}$) having the same sequence number in all the to-be-processed image groups to obtain multiple local features corresponding to each of the to-be-processed images;

determining a feature loss value corresponding to each of the local features;

determining a local feature corresponding to a feature loss value greater than a preset loss threshold as a target local feature;

determining a replacement local feature for the target local features based on a local feature corresponding to the target local feature in a local area of the to-be-processed image; and

replacing the target local feature with the replacement local feature.

In the embodiment, based on local features between to-be-processed images that have different mode types and correspond to the same geographical area, feature replacement is performed on a local feature having a feature loss greater than a predetermined loss threshold to improve the image quality of the to-be-processed image corresponding to the target local feature, thereby realizing cross-mode image complementation and achieving accurate subsequent processing results.

Further, in the present disclosure, based on the arrangement of the to-be-processed images in the to-be-processed image set described above, the general coding unit may directly determine the mode type corresponding to each of the to-be-processed images and all to-be-processed images corresponding to the same geographical region without marking the geographical areas and the mode types of the to-be-processed images, thereby reduce the processing of the initial images by the staff.

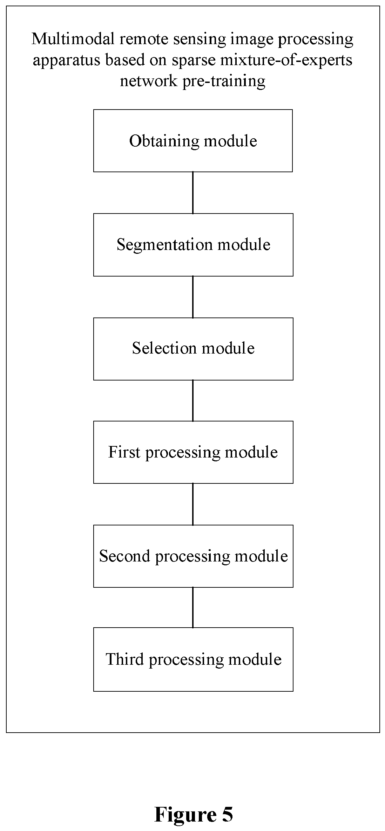

Referring to Figure 5, in an exemplary embodiment of the present disclosure, the multimodal remote sensing image processing apparatus based on sparse mixture-of-experts network pre-training further includes: an obtaining module, a segmentation module, and a selection module.

The obtaining module is configured to obtain original image groups respectively corresponding to target geographic areas. There may be multiple original image groups. Different original image groups correspond to different geographical areas. Each of the original image groups includes at least two original images corresponding to a same target geographic area. Each of the original image groups includes a same number of original images, and original images in a same original image group correspond to different mode types. In the embodiment, the original image is a remote sensing image.

The segmentation module is configured to perform image segmentation on each of original images based on a same resolution rule to obtain multiple candidate to-be-processed images.

The same resolution rule is used for each of the original images, then corresponding candidate to-be-processed images (which may be understood as image fragments) are obtained by performing image segmentation on the original images that correspond to multiple mode types and correspond to the same target geographic area, and the image size of each of the candidate to-be-processed images meets a preset requirement. Those skilled in the art may obtain the resolution rule based on the preset requirement for image size, which is not described herein.

The selection module is configured to perform data selection on the multiple candidate to-be-processed images based on a preset data selection rule to obtain the to-be-processed image set.

Specifically, the obtaining module, the segmentation module, and the selection module perform operations sequentially before the first processing module performing operations.

In the embodiment, the original image is a remote sensing image. Due to the large size of the remote sensing image, the internal processing efficiency of the image processor is to be reduced in a case that the remote sensing image is directly inputted to the image processor, resulting in a long overall processing period. Therefore, image segmentation is performed on the original images in the embodiment, so that the image sizes of the candidate to-be-processed images meet the preset requirement, thereby improving the overall processing efficiency of the image processor and reducing preset time consuming.

Further, in the embodiment, the selection rule is defined as follows. K candidate to-be-processed images are randomly selected from the target original image group as the first to-be-processed images, where K may be configured according to actual requirements. In the embodiment, K ranges from 10 to 50. Specifically, in the embodiment, K=16. Candidate to-be-processed images, corresponding to a geographic area same as the first to-be-processed images, are selected from other original image groups as the second to-be-processed images. The first to-be-processed images and the second to-be-processed images are determined as the to-be-processed images, thereby obtaining the to-be-processed image set.

The candidate to-be-processed images are randomly selected from the target original image group, so that the final determined to-be-processed images include information about ground objects of multiple target geographic areas, and the image processor may learn image features of various information about ground objects in one pre-training process.

In addition, although the steps of the method in the present disclosure are described in a particular order in the attached drawings, it is not required or implied that the steps must be performed in that particular order, or that all of the shown steps must be performed to achieve the desired result. Optionally, some steps may be omitted, multiple steps may be combined into a single step, and/or one step may be decomposed to multiple steps.

Based on the above description of the embodiments, it is easy for those skilled in the art to understand that the embodiments described herein may be implemented by software or by a combination of software and necessary hardware. Therefore, the technical solutions according to the embodiments of the present disclosure may be implemented by a software product. The software product may be stored on a non-volatile storage medium (such as a CD-ROM, a USB drive, and a portable hard drive) or on a network, and includes multiple instructions to cause a computing device (such as a personal computer, a server, a mobile terminal, or a network device) to perform the method according to the embodiments of the present disclosure.

In an exemplary embodiment of the present disclosure, an electronic device for performing the method is further provided.

Those skilled in the art should understand that the aspects of the present disclosure may be implemented as a system, a method or a program product. Therefore, the aspects of the present disclosure may be implemented in a complete hardware implementation form, a complete software implementation form (including firmware, microcode, and the like), or in a form combining hardware and software, which may be respectively referred to as "circuit", "module" or "systems".

The electronic device in the embodiments of the present disclosure is merely an example and should not limit the functions and scope of the embodiments of the present disclosure.

The electronic device may be implemented by as a general-purpose computing device. The electronic device may include, but is not limited to, at least one processor, at least one memory, and a bus connecting different system components (including the memory and the processor).

The memory stores program codes. The program codes may be executed by the processor to cause the processor to perform the steps in the "exemplary method" according to the exemplary embodiments of the present disclosure.

The memory may include a readable media in a volatile memory form, such as random access storage (RAM) and/or a cache memory, and may further include a read-only storage (ROM).

The memory may further include a program/utility having a program module set (including at least one program module). The program module includes, but is not limited to, an operating system, one or more application programs, other program modules and program data, each or some combination of which may include an implementation of a network environment.

The bus may be one or more types of bus structures, including a storage bus or a storage controller, a peripheral bus, a graphics acceleration port, a processor, or a local bus using any of various bus structures.

The electronic device may communicate with one or more external devices (such as, a keyboard, a pointing device, and a Bluetooth device), may communicate with one or more devices that enable the user to interact with the electronic device, and/or communicate with a device (such as, a router and a modem) that enables the electronic device to communicate with one or more other computing devices. The communication may be performed through an input/output (I/O) interface. In addition, the electronic device may communicate with one or more networks (for example, a local area network (LAN), a wide area network (WAN), and/or a public network such as the Internet) through a network adapter. The network adapter communicates with other modules of the electronic device through the bus. It should be understood that although not shown in the Figures, other hardware and/or software modules may be used in conjunction with the electronic device, including but not limited to: microcode, device drivers, redundant processors, external disk drive arrays, RAID systems, tape drives, and data backup storage systems.

Based on the above description of the embodiments, it is easy for those skilled in the art to understand that the embodiments described herein may be implemented by software or by a combination of software and necessary hardware. Therefore, the technical solutions according to the embodiments of the present disclosure may be implemented by a software product. The software product may be stored on a non-volatile storage medium (such as a CD-ROM, a USB drive, and a portable hard drive) or on a network, and includes multiple instructions to cause a computing device (such as a personal computer, a server, a mobile terminal, or a network device) to perform the method according to the embodiments of the present disclosure.

In an exemplary embodiment of the present disclosure, a computer-readable storage medium is further provided. The computer-readable storage medium stores a program product for performing the method according to the present disclosure. In some embodiments, the aspects of the present disclosure may further be implemented in a form of a program product including program codes. The program codes, when executed on a terminal device, cause the terminal device to perform the steps described in the "exemplary method" of the present disclosure according to the exemplary embodiments of the present disclosure.

The program product may adopt a combination of one or more readable mediums. The readable medium may be a readable signal medium or a readable storage medium. The readable storage medium may be, but is not limited to, a system, an apparatus, or a device in an electronic, magnetic, optical, electromagnetic, infrared, or semi-conductive form, or any combination thereof. The readable storage medium may be, but is not limited to, an electrical connection with one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), a light storage device, a magnetic storage device or any combination thereof.

The computer readable signal medium may be a data signal transmitted in a baseband or transmitted as a part of a carrier wave and carrying computer readable program codes. The transmitted data signal may be in various forms, including but not limited to an electromagnetic signal, an optical signal or any proper combination thereof. The readable signal medium may be any readable medium other than the readable storage medium and can send, propagate or transmit programs to be used by or with an instruction execution system, apparatus or device.

The program codes stored in the readable medium may be transmitted via any proper medium including but not limited to: wireless, wired, optical fiber cable, RF, or any suitable combination of the foregoing.

Program codes for performing operations of the present disclosure may be written in one or more programming languages, or a combination of the foregoing, and the programming language includes object oriented programming languages, such as Java and C++, also includes conventional procedural programming languages, such as "C" language or similar programming languages. The program codes may be executed entirely on a user's computer, or be executed partly on the user's computer, or be executed as a stand-alone software package, or be executed partly on the user's computer and partly on a remote computer, or be executed entirely on the remote computer or server. In a case that the execution of the program code involves a remote computer, the remote computer may be connected to a user's computer via any kind of network, including a local area network (LAN) or a wide area network (WAN), or may be connected to an external computer (for example, via an Internet providing by an Internet service provider).

In addition, the attached drawings are only illustrative illustrations of the processing included in the method according to the embodiments of the present disclosure, and are not intended to limit the present disclosure. It is easy to understand that the processes shown in the drawings do not indicate or limit the chronological order of the processes. Further, it is easy to understand that the processes may be performed, for example, synchronously or asynchronously in multiple modules.

It should be noted that although multiple modules or units of the device for performing operations are described in detail in this specification, the division is not mandatory. In fact, in the embodiment of the present disclosure, the features and functions of two or more modules or units described above may be realized in a single module or unit. Conversely, features and functions of a single module or unit described above may be realized by multiple modules or units.

The foregoing descriptions are only preferred embodiments of the present disclosure, which does not limit the patent scope of the present disclosure. Any modifications or replacements that those skilled in the art can easily obtained within the technology scope of the present disclosure should be within the protection scope of the present disclosure. Therefore, the protection scope of the present disclosure should be based on the protection scope of the claims.

**Claims**

1. A multimodal remote sensing image processing method based on sparse mixture-of-experts network pre-training, comprising:

inputting a to-be-processed image set to a general coding unit to obtain an intermediate image set, wherein the to-be-processed image set comprises a plurality of to-be-processed images, the plurality of to-be-processed images comprise at least two mode types of images, the intermediate image set comprises a plurality of intermediate image groups, each of the intermediate image groups comprises a target number of intermediate images, the intermediate images are the to-be-processed images after being processed by the general coding unit, intermediate images in a same intermediate image group correspond to a same mode type, and intermediate images in different intermediate image groups correspond to different mode types; inputting the intermediate image set to a special coding unit to obtain a processed image set, wherein the special coding unit comprises a plurality of coding module groups, each of the coding module groups comprises a plurality of coding modules, each of the coding module groups corresponds to a mode type, a coding module performs single-mode coding processing on an intermediate image having a mode type corresponding to a coding module group that comprises the coding module, and the special coding unit, after receiving the intermediate image set, inputs each of the intermediate image groups to a coding module in a coding module group having a same mode type as the coding module group; and inputting the processed image set to a decoding unit to obtain a processing result;

wherein the to-be-processed image set comprises a plurality of to-be-processed image groups, and each of the to-be-processed image groups comprises a target number of to-be-processed images;

the to-be-processed images in each of the to-be-processed image groups are arranged in a second order, and to-be-processed images having a same sequence number in different to-be-processed image groups correspond to a same geographical area;

to-be-processed images in a same to-be-processed image group correspond to the same mode type, and to-be-processed images in different to-be-processed image groups correspond to different mode types;

the general coding unit, after receiving the to-be-processed image set, performs multimodal joint coding processing on to-be-processed images having a same sequence number in all the to-be-processed image groups; and

the multimodal joint coding processing comprises:

    performing local feature extraction on the to-be-processed images having the same sequence number in all the to-be-processed image groups to obtain a plurality of local features corresponding to each of the to-be-processed images;

    determining a feature loss value corresponding to each of the local features;

    determining a local feature corresponding to a feature loss value greater than a preset loss threshold as a target local feature;

    determining a replacement local feature for the target local features based on a local feature corresponding to the target local feature in a local area of the to-be-processed image; and

    replacing the target local feature with the replacement local feature.

2. The multimodal remote sensing image processing method based on sparse mixture-of-experts network pre-training according to claim 1, wherein the number of the coding module groups is same as the number of the intermediate image groups, and both the plurality of coding module groups and the plurality of intermediate image groups are arranged in a first order.

3. The multimodal remote sensing image processing method based on sparse mixture-of-experts network pre-training according to claim 1 or claim 2, wherein each of the coding module groups comprises the same number of coding modules.

4. The multimodal remote sensing image processing method based on sparse mixture-of-experts network pre-training according to any of the preceding claims, wherein the intermediate images in each of the intermediate image groups are arranged in the second order, and intermediate images having a same sequence number in different intermediate image groups correspond to a same geographical area.

5. The multimodal remote sensing image processing method based on the sparse mixture-of-experts network pre-training described in any of the preceding claims, wherein before inputting the to-be-processed image set to the general coding unit, the multimodal remote sensing image processing method further comprises:

    obtaining original image groups respectively corresponding to target geographic areas, wherein each of the original image groups comprises at least two original images corresponding to a same target geographic area, each of the original image groups comprises a same number of original images, and original images in a same original image group correspond to different mode types;

    performing image segmentation on each of original images based on a same resolution rule to obtain a plurality of candidate to-be-processed images; and

    performing data selection on the plurality of candidate to-be-processed images based on a preset data selection rule to obtain the to-be-processed image set.

6. A multimodal remote sensing image processing apparatus based on sparse mixture-of-experts network pre-training, comprising:

    a first processing module, configured to input a to-be-processed image set to a general coding unit to obtain an intermediate image set, wherein the to-be-processed image set comprises a plurality of to-be-processed images, the plurality of to-be-processed images comprises at least two mode types of images, the intermediate image set comprises a plurality of intermediate image groups, each of the intermediate image groups comprises a target number of intermediate images, the intermediate images are the to-be-processed images after being processed by the general coding unit, intermediate images in a same intermediate image group correspond to a same mode type, and intermediate images in different intermediate image groups correspond to different mode types;

    a second processing module, configured to input the intermediate image set to a special coding unit to obtain a processed image set, wherein the special coding unit comprises a plurality of coding module groups, each of the coding module groups comprises a plurality of coding modules, each of the coding module groups corresponds to a mode type, a coding module performs single-mode coding processing on an intermediate image having a mode type corresponding to a coding module group that comprises the coding module, and the special coding unit, after receiving the intermediate image set, inputs each of the intermediate image groups to a coding module in a coding module group having a same mode type as the coding module group; and
a third processing module, configured to input the processed image set to a decoding unit to obtain a processing result;
wherein the to-be-processed image set comprises a plurality of to-be-processed image groups, and each of the to-be-processed image groups comprises a target number of to-be-processed images;
the to-be-processed images in each of the to-be-processed image groups are arranged in a second order, and to-be-processed images having a same sequence number in different to-be-processed image groups correspond to a same geographical area;
to-be-processed images in a same to-be-processed image group correspond to the same mode type, and to-be-processed images in different to-be-processed image groups correspond to different mode types;
the general coding unit, after receiving the to-be-processed image set, performs multimodal joint coding processing on to-be-processed images having a same sequence number in all the to-be-processed image groups; and
the multimodal joint coding processing comprises:

   performing local feature extraction on the to-be-processed images having the same sequence number in all the to-be-processed image groups to obtain a plurality of local features corresponding to each of the to-be-processed images;
   determining a feature loss value corresponding to each of the local features;
   determining a local feature corresponding to a feature loss value greater than a preset loss threshold as a target local feature;
   determining a replacement local feature for the target local features based on a local feature corresponding to the target local feature in a local area of the to-be-processed image; and

replacing the target local feature with the replacement local feature.

7. The multimodal remote sensing image processing apparatus based on sparse mixture-of-experts network pre-training according to claim 6, wherein the number of the coding module groups is same as the number of the intermediate image groups, and both the plurality of coding module groups and the plurality of intermediate image groups are arranged in a first order.

8. The multimodal remote sensing image processing apparatus based on sparse mixture-of-experts network pre-training according to claim 6 or claim 7, wherein each of the coding module groups comprises the same number of coding modules.

9. The multimodal remote sensing image processing apparatus based on sparse mixture-of-experts network pre-training according to any of claims 6 to 8, wherein the intermediate images in each of the intermediate image groups are arranged in the second order, and intermediate images having a same sequence number in different intermediate image groups correspond to a same geographical area.

10. The multimodal remote sensing image processing apparatus based on sparse mixture-of-experts network pre-training according to any of claims 6 to 9, further comprising:

   an obtaining module, configured to obtain original image groups respectively corresponding to target geographic areas, wherein each of the original image groups comprises at least two original images corresponding to a same target geographic area, each of the original image groups comprises a same number of original images, and original images in a same original image group correspond to different mode types;
   a segmentation module, configured to perform image segmentation on each of original images based on a same resolution rule to obtain a plurality of candidate to-be-processed images; and
   a selection module, configured to perform data selection on the plurality of candidate to-be-processed images based on a preset data selection rule to obtain the to-be-processed image set.

11. An electronic device, comprising:

   a memory; and
   a processor, configured to, when executing a program or instructions stored in the memory, perform the multimodal remote sensing image processing method according to any one of claims 1 to 5.

12. Anon-transient computer-readable storage medium, storing a program or instructions, wherein the program or the instructions, when executed on a computer, cause the computer to perform the multimodal remote sensing image processing method according to any one of claims 1 to 5.

Input a to-be-processed image set to a general coding unit to obtain an intermediate image set S100

Input the intermediate image set to a special coding unit to obtain a processed image set S200

Input the processed image set to a decoding unit to obtain a processing result S300

**Figure 1**

Obtain original image groups respectively corresponding to target geographic areas — S010

Perform image segmentation on each of original images based on a same resolution rule to obtain multiple candidate to-be-processed images — S020

Perform data selection on the multiple candidate to-be-processed images based on a preset data selection rule to obtain the to-be-processed image set — S030

Input a to-be-processed image set to a general coding unit to obtain an intermediate image set — S100

Input the intermediate image set to a special coding unit to obtain a processed image set — S200

Input the processed image set to a decoding unit to obtain a processing result — S300

**Figure 2**

Image processor

Encoder

General processing unit

Special processing unit

| Coding module 1 | Coding module 2 | Coding module 3 | ········ | Coding module n |

Decoder

Decoding unit

**Figure 3**

Multimodal remote sensing image processing
apparatus based on sparse mixture-of-experts
network pre-training

First processing module

Second processing module

Third processing module

**Figure 4**

Multimodal remote sensing image processing apparatus based on sparse mixture-of-experts network pre-training

Obtaining module

Segmentation module

Selection module

First processing module

Second processing module

Third processing module

**Figure 5**

Europäisches
Patentamt

European
Patent Office

Office européen
des brevets

# EUROPEAN SEARCH REPORT

Application Number

EP 23 21 5427

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIU XIANGZENG ET AL: "MFST: Multi-Modal Feature Self-Adaptive Transformer for Infrared and Visible Image Fusion", REMOTE SENSING, vol. 14, no. 13, 5 July 2022 (2022-07-05), page 3233, XP93145702, CH ISSN: 2072-4292, DOI: 10.3390/rs14133233 * sections 3 and 4; figures 1-6 * | 1-12 | INV. G06V10/26 G06T5/60 G06V10/80 G06V10/82 G06V10/98 G06V20/10 |
| A | REN BO ET AL: "A dual-stream high resolution network: Deep fusion of GF-2 and GF-3 data for land cover classification", INTERNATIONAL JOURNAL OF APPLIED EARTH OBSERVATION AND GEOINFORMATION, ELSEVIER, AMSTERDAM, NL, vol. 112, 18 July 2022 (2022-07-18), XP087161331, ISSN: 1569-8432, DOI: 10.1016/J.JAG.2022.102896 [retrieved on 2022-07-18] * sections 2-4; figures 1-12 * | 1-12 | |

TECHNICAL FIELDS
SEARCHED      (IPC)

G06V
G06T

The present search report has been drawn up for all claims

| Place of search | Date of completion of the search | Examiner |
|---|---|---|
| The Hague | 28 March 2024 | Atmatzidis, Lazaros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................

& : member of the same patent family, corresponding document

EPO FORM 1503 03.82 (P04C01)